(19) Europäisches Patentamt
European Patent Office
Office européen des brevets

(11) EP 2 543 715 B1

(12) EUROPEAN PATENT SPECIFICATION

(45) Date of publication and mention of the grant of the patent:
**01.11.2017 Bulletin 2017/44**

(21) Application number: **11005481.4**

(22) Date of filing: **05.07.2011**

(51) Int Cl.:
***C09K 15/00*** (2006.01) ***C08K 3/04*** (2006.01)
***C08F 10/02*** (2006.01) ***C08K 5/00*** (2006.01)
***C08K 5/13*** (2006.01) ***C08K 5/1545*** (2006.01)

(54) **Use of carbon black and antioxidants for reducing taste and/or odour in a polyolefin composition**

Verwendung von Ruß und Antioxidationsmitteln zur Verringerung des Geschmacks und/oder Geruchs in einer Polyolefinzusammensetzung

Utilisation de noir de charbon et antioxydants permettant de réduire le goût et/ou l'odeur dans une composition de polyoléfine

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.01.2013 Bulletin 2013/02**

(73) Proprietor: **Borealis AG**
**1220 Vienna (AT)**

(72) Inventors:
- **Tynys, Antti**
  **4020 Linz (AT)**
- **Sandholzer, Martina**
  **4030 Linz (AT)**
- **Jamtvedt, Svein**
  **3960 Stathelle (NO)**
- **Knall, Astrid-Caroline**
  **8055 Graz (AT)**
- **Standler, Alexander**
  **4231 Wartberg/Aist (AT)**

(74) Representative: **Kador, Utz Ulrich**
**Kador & Partner**
**Corneliusstrasse 15**
**80469 München (DE)**

(56) References cited:
**EP-A1- 1 939 243** **WO-A1-2010/149607**
**US-A- 4 833 181** **US-B1- 6 448 357**

- **MULLER D ET AL: "VITAMIN E - A NEW CHOICE FOR POLYOLEFIN STABILIZATION", MACROMOLECULAR SYMPOSIA, WILEY VCH VERLAG, WEINHEIM, DE, no. 176, 1 November 2001 (2001-11-01), pages 17-29, XP001117102, ISSN: 1022-1360, DOI: 10.1002/1521-3900(200112)176:1<17::AID-MASY17>3.0.CO;2-D**
- **DATABASE WPI Week 200442 Thomson Scientific, London, GB; AN 2004-444268 XP002665273, & JP 2004 142816 A (TOSOH CORP) 20 May 2004 (2004-05-20)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 543 715 B1

## Description

The present invention relates to the use of a combination of two or more components selected from carbon black and one or more antioxidants for reducing taste and/or odour in a polyolefin composition.

Taste and odour developments in plastic materials is known due to taste and odour developing substances caused by chemical degradation or transformation in connection with the production of compounding of the plastic materials. Such substances can be of a highly varying chemical character. Even comparatively low concentrations of such odour- and taste-producing substances constitute a disadvantage in plastic materials as the human being is highly susceptible to odours and tastes in general. Concentrations as low as one or a few ppb are sufficient to make a taste or odour evident. Therefore, attempts have been made to overcome or at least reduce such odours and tastes in various ways such as by degassing the plastic material. The effects of these attempts are reduced and the methods are lengthy and expensive.

It is known to remove undesired taste and odour by means of adsorbing substances, e.g. silica gel, activated aluminium oxide, diatomaceous earth and zeolites.

EP 1 942 135 discloses the use of amorphous silica as a taste and odour reducing agent in an olefin homo- or copolymer.

JP 1,023,970 suggests adding of e.g. aluminium hydroxide, clay, diatomaceous earth, kaolin, talc, bentonite, activated carbon or activated carbon fibre for materials for packing foodstuffs to be heated in the packing. However, such additives have been found to be without any appreciable effect, except under special circumstances.

Bledzki et al. report in Polymer Testing, Vol. 18, No. 1, 6371, 1999 on reduction of odour emissions in plastic materials by the use of activated charcoal which was extruded into the plastics. The results were evaluated by dynamic olfactometry and odour concentration could be reduced up to about 50 %.

EP Patent No. 0522129 discloses a process for eliminating taste/odour-producing substances in plastic water pipes by adding a specific type of zeolitic molecular sieve to a polyolefin material during processing thereof in a molten state and subsequently forming the polymer material to a water pipe. This process still suffers from a comparatively complex processing and needs a sophisticated additive, namely a hydrophobic aluminium silicate molecular sieve having a pore diameter of at least 5.5 A, an Si/Al molar ratio in the crystal letters of at least 35, and a sorption capacity for water at 25°C and 613 Pa of less than 10 wt.-%.

US Patent No. 4,833,181 proposes a polyolefin composition comprising a polyolefin, vegetable fibres mainly composed of cellulose fibres and a deodourizer selected from the group consisting of a combination of a metallic soap and an amine antioxidant, activated carbon, zeolite and a phosphorus compound. Moreover, it is disclosed that the effects of the emission of the deodourizer are enhanced if an antioxidant is further added. In concrete examples a phenolic antioxidant is used in admixture with activated carbon. Also this technology needs complex processing and sophisticated combination of materials which makes the preparation of the final product cost intensive.

However, albeit the above-mentioned methods lead to some reduction in taste and/or odour, these properties can still be improved.

Thus, it is the object of the present invention to further improve the taste and/or odour properties of a polyolefin composition while simultaneously maintaining desirable and superior mechanical properties and which material can be produced by a simple procedure and at low cost.

It has been surprisingly found that a combination of additives comprising at least two components selected of carbon black and two types of antioxidants results in a significant reduction of taste and odour.

Thus, the present invention relates to the use of a combination of additives comprising at least two of the following compounds

- an antioxidant (A) according to formula (I):

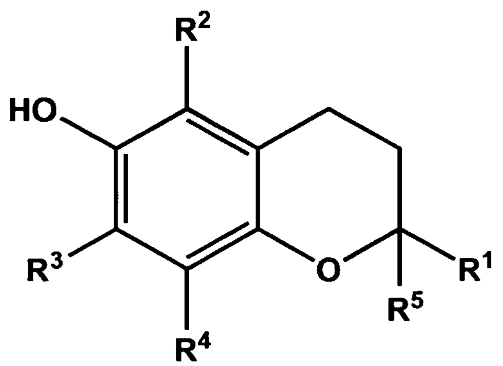

(I)

wherein $R^1$, $R^2$, $R^3$, $R^4$ and $R^5$ independently are H, or non-substituted or substituted aliphatic or aromatic hydrocarbyl radicals which may comprise heteroatoms,

- an antioxidant (B) according to formula (II):

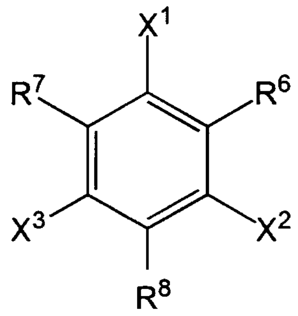

(II)

wherein

- ◦ $R^6$, $R^7$ and $R^8$ independently are non-substituted or substituted aliphatic or aromatic hydrocarbyl radicals which may comprise OH-groups;
- ◦ $X^1$, $X^2$, and $X^3$ independently are H or OH, with the provisio that at least one of $X^1$, $X^2$ and $X^3$ is OH; and
- ◦ the entire molecule does not comprise an ester group;

and

- carbon black;
  for reducing taste and/or odour in a polyolefin composition.

As often taste generating substances also result in undesired odour, usually taste and odour is reduced.
Preferably the combination of additives comprises

- carbon black;
  and, in addition to carbon black

- an antioxidant (A) according to formula (I)
  and/or
  an antioxidant (B) according to formula (II);
  more preferably, the combination of additives comprises

- carbon black;
  and, in addition to carbon black

- an antioxidant (A) according to formula (I);
  and
  an antioxidant (B) according to formula (II).

Preferably the sum of components (A) and (B), if both are present, is not more than 2500 ppm, preferably not more than 2000 ppm and most preferably not more than 1750 ppm based on the polyolefin composition.
Usually the sum of components (A) and (B), if both are present, is at least 600 ppm, preferably, at least 850 ppm and most preferably at least 1100 ppm based on the polyolefin composition.
The heteroatoms which may be present in the non-substituted or substituted aliphatic or aromatic hydrocarbyl radicals $R^1$, $R^2$, $R^3$, $R^4$ and/or $R^5$ of antioxidant (A) according to formula (I) may be oxygen, sulphur, nitrogen, phosphorus or the like. It is, however, preferred that $R^1$, $R^2$, $R^3$, $R^4$ or $R^5$, more preferred $R^1$, $R^2$, $R^3$, $R^4$ and $R^5$, do not comprise heteroatoms, i.e. are non-substituted or substituted aliphatic or aromatic hydrocarbyl radicals only, or, as mentioned, H.
Furthermore, preferably $R^2$, $R^3$, $R^4$ or $R^5$, more preferably $R^2$, $R^3$, $R^4$ and $R^5$, are H, or saturated aliphatic hydrocarbyl radicals comprising from 1 to 5 carbon atoms, and still more preferably $R^2$, $R^3$, $R^4$ or $R^5$, more preferably $R^2$, $R^3$, $R^4$ and $R^5$, are H, or methyl groups.

Furthermore, preferably $R^5$ is a methyl group, regardless of the nature of the other residues $R^2$ to $R^4$.

In an especially preferred embodiment, $R^4$ and $R^5$ are methyl groups, and $R^2$ and $R^3$ are H, or methyl groups.

Most preferably, $R^2$, $R^3$, $R^4$ and $R^5$ are all methyl groups.

Still further, preferably $R^1$ is a non-substituted or substituted aliphatic or aromatic hydrocarbyl radical containing from 5 to 50 carbon atoms, more preferably $R^1$ is a non-substituted or substituted aliphatic hydrocarbyl radical containing from 5 to 50, more preferably from 10 to 30, carbon atoms, and most preferably $R^1$ is a 4,8,12-trimethyl-tridecyl group.

Preferably, component (A) does not comprise a metal atom.

Still more preferred, antioxidant (A) is 2,5,7,8-Tetrametyl-2-(4',8',12'-trimethyltridecyl)chroman-6-ol (Vitamine E).

In case component (A) is present, component (A) is preferably present in an amount of not more than 1000 ppm, more preferably not more than 700 ppm and most preferably not more than 400 ppm based on the polyolefin composition.

Usually, component (A), if present, is present in an amount of at least 100 ppm, preferably at least 150 ppm and most preferably at least 200 ppm based on the polyolefin composition.

In antioxidant (B) according to formula (II) residues $R^6$, $R^7$ and $R^8$ independently are non-substituted or substituted aliphatic or aromatic hydrocarbyl radicals which may comprise OH-groups. Preferably, apart from OH-groups no further heteroatoms are present in $R^6$, $R^7$ and $R^8$, so that phenolic stabilizer (B) is e.g. free of ester groups, amide groups and groups containing phosphorus.

Preferably, $R^6$, $R^7$ and $R^8$ which independently are non-substituted or substituted aliphatic or aromatic, more preferably aliphatic, hydrocarbyl radicals which may comprise OH-groups, have from 2 to 200 carbon atoms.

Preferably, $R^6$ and $R^7$ independently have from 2 to 20 carbon atoms, more preferably from 3 to 10 carbon atoms.

Furthermore, it is preferred that $R^6$ and/or $R^7$, more preferably $R^6$ and $R^7$, are aliphatic hydrocarbyl groups with at least 3 carbon atoms which have a branch at the second carbon atom, and most preferably $R^6$ and/or $R^7$, more preferably $R^6$ and $R^7$, are *tert.*-butyl groups.

Preferably, $R^8$ has from 20 to 100 carbon atoms, more preferably has from 30 to 70 carbon atoms.

Furthermore, it is preferred that $R^8$ includes one or more phenyl residues.

Still further, it is preferred that $R^8$ includes one or more hydroxyphenyl residues.

In the most preferred embodiment, $R^8$ is a 2,4,6-tri-methyl-3,5-di-(3,5,-di-tert. butyl-4-hydroxyphenyl) benzene residue.

Preferably, in antioxidant (B) of formula (II) $X^1$ is OH, and most preferably $X^1$ is OH and $X^2$ and $X^3$ are H.

It is particularly preferred that antioxidant (B) is 1,3,5-Tri-methyl-2,4,6-tris-(3,5-di-tert. butyl-4-hydroxyphenyl) benzene (Irganox 1330).

In case component (B) is present, component (B) is preferably present in an amount of not more than 2000 ppm, more preferably not more than 1700 ppm and most preferably not more than 1400 ppm based on the polyolefin composition.

Usually, component (B), if present, is present in an amount of at least 500 ppm, preferably at least 700 ppm and most preferably at least 900 ppm based on the polyolefin composition.

Preferably, the polyolefin composition comprises not more than four different compounds of formulas (I) and/or (II), more preferably not more than three different compounds of formulas (I) and/or (II), even more preferably not more than two different compounds of formulas (I) and/or (II) and most preferably only one compound of formula (I) and only one compound of formula (II).

Preferably, compounds (A) and (B) do not contain a phosphor atom.

In the present invention the carbon black is preferably having a BET specific surface area of from 10 to 500 $m^2/g$, more preferably, the carbon black has a BET specific surface area of from 50 to 300$m^2/g$.

Preferably, the carbon black has an ash content of not more than 1.0 wt.%, preferably, not more than 0.5 wt.% and most preferably not more than 0.25 wt.%.

The carbon black may be further characterized by its bulk density. Preferably, the Pour Density (ASTM D1513) of the carbon black is not more than 750 $kg/m^3$, more preferably not more than 600 $kg/m^3$ and most preferably not more than 500 $kg/m^3$. Usually the bulk density of the carbon black is at least 325 $kg/m^3$.

Preferably the iodine value of the carbon black is at least 50 mg iodine/g carbon black, more preferably at least 75 mg iodine/g carbon black and most preferably at least 90 mg iodine/g carbon black. Usually the iodine value of the carbon black is not higher than 300 mg iodine/g carbon black.

The carbon black preferably has an oil absorption number of not more than 300 $cm^3$/100 g, more preferably of not more than 250 $cm^3$/100 g and most preferably of not more than 150 $cm^3$/100 g,

Preferably, the carbon black has an oil absorption number of at least 25 $cm^3$/100 g, more preferably of at least 50 $cm^3$/100 g and most preferably of at least 75 $cm^3$/100 g,

The carbon black, if present, is preferably present in an amount of not more than 10.0 wt.%, more preferably of not more than 7.0 wt.% and most preferably of not more than 4.0 wt.% based on the polyolefin composition.

If present, the carbon black is usually present in an amount of at least 1.0 wt.%, preferably of at least 1.5 wt.% and most preferably of at least 2.0 wt.% based on the polyolefin composition.

Preferably, the combination of additives further includes at least one metal salt of an organic acid. Preferably, the metal salt of an organic acid is selected from the group of alkali and/or earth alkali and/or transition metal salts of an organic acid. More preferably, the metal salt of an organic acid is selected from the group of alkali and/or earth alkali and/or transition metal stearate, or lactate. More preferably, the metal salt of an organic acid is selected from the group of calcium stearate, sodium stearate, zinc stearate or calcium dilactate. Most preferred is calcium stearate.

Preferably the metal salt of an organic acid is present in an amount of at least 500 ppm, preferably at least 800 ppm and most preferably at least 1100 ppm based on the polyolefin composition. Usually the amount of the metal salt of an organic acid is not higher than 5000 ppm, preferably not higher than 2500 ppm and most preferably not higher than 2000 ppm.

The polyolefin composition may be any polyolefin composition which is suitable for pipe applications and/or injection molding of fittings, preferably such polyolefin compositions which can be extruded into pipes.

The polyolefin composition preferably has a density of at least 950 kg/$m^3$, more preferably of at least 952 kg/$m^3$ and most preferably of at least 954 kg/$m^3$. The density of the polyolefin composition is preferably not higher than 965 kg/$m^3$, more preferably not higher than 963 kg/$m^3$ and most preferably not higher than 961 kg/$m^3$.

The polyolefin composition preferably has a resistance to rapid crack propagation, determined according to ISO 13477 at 0 °C of at least 6 bar, more preferably of at least 8 bar. Usually the resistance to rapid crack propagation, determined according to ISO 13477 at 0 °C will be not higher than 15 bar.

Still further, it is preferred that the polyolefin composition comprises an ethylene homo- or copolymer, more preferably comprises an ethylene homo- or copolymer in an amount of at least 75 wt.%, even more preferably at least 85 wt.% based on the polyolefin composition and most preferably at least 90 wt.% based on the polyolefin composition.

In a preferred embodiment the polyolefin part of said polyolefin composition (so-called base resin) consists of an ethylene homo- or copolymer and polymers introduced into the composition as master batches. Usually, the amount of polymers introduced into the composition as master batches is not more than 15.0 wt.% of the polyolefin part, preferably is not more than 8.0 wt.% of the polyolefin part and most preferably is not more than 4.0 wt.% of the polyolefin part. Master batches which contain a polymer and the respective additive in high concentration are usually employed to facilitate handling of those additives. Thereby also the safety is improved as working with the additive in powder (or even dust form) is not required. Carbon black is usually used as master batch due to its combustible nature. The concentration of carbon black in such master batches is usually from 15 to 50 wt.% of the master batch, preferably from 35 to 45 wt.% of the master batch.

The density of the base resin is preferably not more than 965 kg/$m^3$, preferably is not more than 960 kg/$m^3$, even more preferably not more than 955 kg/$m^3$ and most preferably is not more than 950 kg/$m^3$.

Preferably, the density of the base resin is at least 941 kg/$m^3$, more preferably at least 943 kg/$m^3$ and most preferably at least 945 kg/$m^3$.

The base resin of said polyolefin composition may be any homo- or copolymer of ethylene, still more preferably a homo- or copolymer of ethylene wherein the comonomers are alpha-olefins having between 3 and 20 carbon atoms.

In one embodiment of the invention the base resin comprises two or more polyolefin, more preferably polyethylene, fractions with different weight average molecular weight. Such resins usually are denoted as multimodal resins.

Polyolefin, in particular polyethylene, compositions comprising multimodal resins are frequently used e.g. for the production of pipes due to their favourable physical and chemical properties as e.g. mechanical strength, corrosion resistance and long-term stability. Such compositions are described e.g. in EP 0 739 937 and WO 02/102891. The term molecular weight used herein generally denotes the weight average molecular weight $M_w$.

As mentioned, usually a polyethylene composition comprising at least two polyolefin fractions, which have been produced under different polymerisation conditions resulting in different weight average molecular weights for the fractions, is referred to as "multimodal". The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

Preferably, the homo- or copolymer of ethylene has an $MFR_5$ (5.00 kg, 190 °C, ISO 1133) of at least 0.05 g/10 min, more preferably of at least 0.10 g/10 min and most preferably at least 0.15 g/10 min.

The $MFR_5$ (5.00 kg, 190 °C, ISO 1133) of the homo- or copolymer of ethylene is preferably not more than 5.0

g/10 min, more preferably, not more than 2.0 g/10 min, even more preferably not more than 0.75 g/10 min and most preferably not more than 0.50 g/10 min.

The density of the homo- or copolymer of ethylene is preferably not more than 965 kg/$m^3$, preferably is not more than 960 kg/$m^3$, even more preferably not more than 955 kg/$m^3$ and most preferably is not more than 950 kg/$m^3$.

Preferably, the density of the homo- or copolymer of ethylene is at least 941 kg/$m^3$, more preferably at least 943 kg/$m^3$ and most preferably at least 945 kg/$m^3$.

Preferably the $SHI_{2,7/210}$ of the polyolefin composition, determined at 190°C is within the range of 20 to 90, more preferably within the range 25 to 75 and most preferably within the range 39 to 60.

Preferably the viscosity at a shear stress of 747 Pa of the polyolefin composition (η747 kPa*s) determined at 190°C is within the range of 150 to 750 kPa, more preferably within the range of 225 to 600 kPa and most preferably, within the range of 330 to 480 kPa.

Preferably, the polyolefin composition is in the form of a pipe.

Thus, the present application is further directed to the use of a combination of additives comprising at least two of the following compounds:

- an antioxidant (A) according to any of the above embodiments of the invention
- an antioxidant (B) according to any of the above embodiments of the invention and
- carbon black according to any of the above embodiments of the invention;

for reducing taste and/or odour in a pipe comprising a polyolefin composition according to the above embodiments of the invention.

As will be readily appreciated, in case of a pipe the combination of antioxidants is part of the polyolefin composition.

Such a pipe is especially suitable for the transportation of water, particularly drinking water.

Usually the pipe comprises at least 90 wt.% of the polyolefin composition, preferably at least 95 wt.% of the polyolefin composition, even more preferably at least 98 wt.% of the polyolefin composition and most preferably, the pipe consists of the polyolefin composition.

The combination of additives, the polyolefin composition and the pipe, respectively, preferably do not contain any phosphorous containing antioxidants, more preferably do not contain any phosphorous containing additives. Thus, as already outlined above, not only antioxidants (A) and (B) are preferably free of phosphorous but preferably also no additional phosphorous containing antioxidants, more preferably any phosphorous containing additves is/are present in the composition and pipe, respectively.

The polyolefin composition may be prepared by a process which comprises the steps of

a) adding to the polymer in its molten state at least two of the following compounds

- antioxidant (A) according to any of the above embodiments of the invention
- antioxidant (B) according to any of the above embodiments of the invention, and
- carbon blackaccording to any of the above embodiments of the invention

and
b) thoroughly compounding the components to obtain a homogeneous polyolefin composition.

According to the present invention, when the combination of additives is added to the polyolefin raw material in its molten state, it may be compounded to pellets of finished material. The carbon black and antioxidants may be added either as such or in the form of a so-called master batch, i.e. mixed with a polymer (usually called matrix polymer or carrier polymer). The process may preferably be conducted in an extruder or another compounding device. If an extruder is used, the components are mixed and the carbon black is uniformly distributed by dispersion in the molten polymer material.

In the final polyolefin composition the combination of additives effectively catches and eliminates undesired odour- and/or taste-causing substances and therefore, an effective and improved taste- and/or odour reduction is provided which facilitates the transport of any desired material through such pipe material, especially if water pipes are envisaged.

**Examples:**

Description of measurement methods

Taste and/or Odour testing (organoleptic testing)

For the purpose of determining the emission of taste-causing substances from different plastic materials, several materials have been tested while using a taste panel. The material was pelletized in conjunction with the extrusion and put in clean glass bottles in order to conserve the taste and odour level.

Sample preparation

A sample of 8 g pellets was taken for each test. The pellet sample is placed in a 200 ml Erlenmeyer flask with ground joint containing a magnetic bar and flushed with tap water for 30 min.

The flush water is removed and the flask is filled with reference water and closed with a glass plug. The ratio between granules and water volume should be 40 g/1000ml. It is important that no air bubbles appear between the glass plug and the granules.

The flask is placed for 4 hours in a magnetic agitator bath with a temperature of 30 °C ± 1 °C for polyethylene material (polypropylene material: bath has a temperature of 70°C ± 1 °C) and with a good stirring speed. After the extraction, the test water is poured into a TON-flask (DIN-EN 1622:2006-8) and cooled down to room temperature. The reference water is prepared as described above but without granules. The difference in temperature between the test water and the reference water may must not exceed 0.5 °C. The test is carried out according to DIN-EN 1622:2006-8 as follows.

The organoleptic panel shall consist of 5 or more participants for the taste test and 3 or more participants for the odour test. The participants shall be trained and familiar with taste/odour judgement of water samples. The test water was diluted according to table below:

| Sample | Test water (ml) = X | Dilution water (ml) = Y | Dilution level = Taste/odour level = (X+Y)/X |
|---|---|---|---|
| 1 | 400 | 0 | 1 |
| 2 | 267 | 133 | 1.5 |
| 3 | 200 | 200 | 2 |
| 4 | 100 | 300 | 4 |

Calculation of taste/odour level is performed according to formula:

$$(X+Y)/X = \text{taste/odour level},$$

wherein:

X = volume (ml) of the test water in the mixture, where the taste and odour can be detected.

Y = volume of dilution water, which is used in the mixture (total) volume X + Y = 400 ml. The dilution water shall have the same quality as the reference water.

The test water samples, 1 - 4, are transferred to plastic cups and placed in front of each participant. Place the cups in a system, where the degree of test water in the samples increases gradually, i.e. sample no 4 as the first sample and sample no 1 as the last sample.

Fill 4 cups with reference water, which are placed in pairs with diluted samples. Next to these samples, place a cup with known reference water (0 - sample). The task for the participant in the panel is to compare to known reference water with the coded samples in each pair of cups.

The participant will decide if the two samples in each pair are equal or if any of the samples have an annoying taste/odour. In a protocol, the participant indicates with a cross if any of the samples pairs have an annoying taste/odour. The procedure is to start with sample pair no. 4 and conclude with sample pair no. 1, i.e. any possible taste/odour annoying components are gradually increasing. A protocol for taste/odour test is enclosed.

The result from the taste/odour test is recorded in a protocol and evaluated. The highest dilution level, for which a majority of the panelists record taste or odour, becomes the result of the taste / odour test. As an example, if 3 out of 5 panelist record taste at a dilution level of 1.5, but just 2 out of 5 record taste at dilution level 2, the result of the taste test becomes 1.5-2. (The majority feel taste at dilution level 1.5 but not a dilution level 2, thus the "true" taste level is somewhere between 1.5 and 2)
The following taste/odour levels exist; <1, 1-1.5, 1.5-2, 2-4, >4
Example of different taste/odour points and corresponding taste/odour levels with 5 participants in the organoleptic panel,

| taste/odour points | taste/odour level |
|---|---|
| 2110 | <1 |
| 3210 | 1 - 1.5 |
| 3321 | 1.5 - 2 |
| 5430 | 2 - 4 |
| 5533 | >4 |

The border line for a material to be approved concerning taste/odour is typically 1.5-2.
As a complement, a normalized model (POH2n) generating a decimal taste/odour value, has been used. Based on experience the normalized POH2n model generates values that better reflect the true taste/odour level than the discrete taste/odour levels described above and thus provides for a more sensitive method to better discriminate between the different taste/odour levels. Moreover, a decimal value obviously gives a higher resolution, which is valuable when analyzing taste and odour.
The normalized POH2n model is now further explained by the following equation [1]:

$$\text{taste/odour}_{POH2n} = ((a-b)\cdot 1.25 + (b-c)\cdot 1.75 + (c-d)\cdot 3 + d\cdot 5) / P \qquad [1]$$

and description, wherein a, b, c, and d are the number of panelists feeling taste/odour at particular dilution levels of 1, 1.5, 2 and 4, respectively, corresponding to the taste points, and P is the total number of panelists. P is typically 5 for taste testing and 3 for odour testing. Examples of different taste/odour testing and corresponding results using the POH2n model with 5 participants in the organoleptic panel is now shown.

Melt flow rate

The melt flow rate was determined according to ISO 1133 for propylene homo-or copolymers at 230°C, at a 2.16 kg load ($MFR_2$) and for ethylene homo- or copolymers at 190°C, at a 5.00 kg load ($MFR_5$).

Density

Density of the polymer was measured according to ISO 1183-1:2004 on compression moulded specimen prepared according to EN ISO 1872-2(February 2007) and is given in $kg/m^3$.

BET surface determination

ASTM D 6556 - 04, Carbon Black - Total and External Surface area by Nitrogen Adsorption number of data points 5; sample mass 0,4g

Ash content determination

ASTM D-1506-99 Carbon Black - Ash Content Method B

Carbon Black pour density

ASTM D-1513-05 Carbon Black, Pelleted - Pour Density

Iodine value

The iodine number of the carbon black samples was measured in accordance with ASTM D1510-11 Method B.

Oil absorption number

**[0095]** ASTM D-2414 - 09a Oil DBP; end-point determination procedure A; sample mass according 9.2 of ASTM D2414-09a

Rheology

Rheological parameters such as Shear Thinning Index SHI and Viscosity are determined by using a rheometer, preferably an Anton Paar Physica MCR 300 Rheometer on compression moulded samples under nitrogen atmosphere at 190 °C using 25 mm diameter plates and plate and plate geometry with a 1.8 mm gap according to ATSM 1440-95. The oscillatory shear experiments were done within the linear viscosity range of strain at frequencies from 0.05 to 300 rad/s (ISO 6721-1). Five measurement points per decade were made. The method is described in detail in WO 00/22040.

The values of storage modulus (G'), loss modulus (G") complex modulus (G*) and complex viscosity ($\eta$*) were obtained as a function of frequency ($\omega$). $\eta$100 is used as abbreviation for the complex viscosity at the frequency of 100 rad/s.

Shear thinning index (SHI), which correlates with MWD and is independent of Mw, was calculated according to Heino ("Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and "The influence of molecular structure on some rheological properties of polyethylene", Heino, E.L., Borealis Polymers Oy, Porvoo, Finland, Annual Transactions of the Nordic Rheology Society, 1995.).

SHI value is obtained by calculating the complex viscosities at given values of complex modulus and calculating the ratio of the two viscosities. For example, using the values of complex modulus of 2.7 kPa and 210 kPa, then $\eta$*(2.7 kPa) and $\eta$*(210 kPa) are obtained at a constant value of complex modulus of 2.7 kPa and 210 kPa, respectively. The shear thinning index SHI2.7/210 is then defined as the ratio of the two viscosities $\eta$*(2.7 kPa) and $\eta$*(210 kPa), i.e. $\eta$(2.7)/$\eta$(210).

It is not always practical to measure the complex viscosity at a low value of the frequency directly. The value can be extrapolated by conducting the measurements down to the frequency of 0.126 rad/s, drawing the plot of complex viscosity vs. frequency in a logarithmic scale, drawing a best-fitting line through the five points corresponding to the lowest values of frequency and reading the viscosity value from this line.

Definition for viscosity at a shear stress of 747 Pa ($\eta$747)

The definition and measurement conditions are described in detail on page 8 line 29 to page 11, line 25 of WO 00/22040 which is herewith incorporated by reference.

Rapid crack propagation

The rapid crack propagation (RCP) resistance of a pipe is determined according to a method called the S4 test (Small Scale Steady State), which has been developed at Imperial College, London, and which is described in ISO 13477:1997 (E).

According to the RCP-S4 test a pipe is tested, which has an axial length not below 7 pipe diameters. The outer diameter of the pipe is about 110 mm or greater and its wall thickness about 10 mm or greater. When determining the RCP properties of a pipe in connection with the present invention, the outer diameter and the wall thickness have been selected to be 110 mm and 10 mm, respectively. While the exterior of the pipe is at ambient pressure (atmospheric pressure), the pipe is pressurised internally, and the temperature of the pipe is kept constant at a temperature of 0°C. The pipe and the equipment surrounding it are thermostatted to a predetermined temperature. A number of discs have been mounted on a shaft inside the pipe to prevent decompression during the tests. A knife projectile is shot, with well-defined forms, towards the pipe close to its one end in the so-called initiating zone in order to start a rapidly running axial crack. The initiating zone is provided with an abutment for avoiding unnecessary deformation of the pipe. The test equipment is adjusted in such a manner that crack initiation takes place in the material involved, and a number of tests are effected at varying temperatures. The axial crack length in the measuring zone, having a total length of 4.7 times the pipe diameter, is measured for each test and is plotted against the set test temperature. If the crack length exceeds 4.7 times the pipe diameter, the crack is assessed to propagate. If the pipe passes the test at a given pressure, the pressure is increased successively until a pressure is reached, at which the pipe no longer passes the test and the crack

propagation exceeds 4.7 times the pipe diameter. The critical pressure (pcrit), i.e. the ductile brittle transition pressure as measured according to ISO 13477:1997 (E) is the highest pressure at which the pipe passes the test. The higher the critical pressure ($p_c$) the better, since it results in an extension of the applicability of the pipe.

In case the rapid crack propagation resistance of the composition is reported, a specimen as defined above has been prepared and the rapid crack propagation resistance determined thereon.

### Additives

Carbon black: A masterbatch containing 39.5 wt.% carbon black (Elftex TP, distributed by Cabot), 0.1 wt.% Pentaerythrityl-tetrakis(3-(3',5'-di-tert. butyl-4-hydroxyphenyl)-propionate (commercially available as Irganox 1010 from Clba, now part of BASF) and 60.4 wt.% BCL-5931 (which is an ethylene-butylene compolymer having a comonomer content of 1.7 wt.%, an MFR2 (2.16 kg, 190°C, ISO 1133) of 30 g/10 min and a density of 959 kg/$m^3$ has been used.

Irganox 1010 (Pentaerythrityl-tetrakis(3-(3',5'-di-tert. butyl-4-hydroxyphenyl)-propionate) distributed by Ciba.

Irgafos 168 (Tris (2,4-di-t-butylphenyl) phosphite) distributed by Ciba.

Irganox 1330 (1,3,5-tri-methyl-2,4,6-tris-(3,5-di-tert. butyl-4-hydroxyphenyl) benzene) distributed by Ciba.

Irganox E 201 (2,5,7,8-Tetramethyl-2(4',8',12'-trimethyltridecyl)chroman-6-ol) distributed by Ciba

Calcium stearate: CAS 1592-23-0, Calcium stearate SP distributed by Faci

### Polymers

P1 is a high density ethylene-1-butene-copolymer having a density of 946 kg/$m^3$, an $MFR_5$ (5.00 kg, 190 °C, ISO 1133) of 0.30 g/10 min and a comonomer-content of 1.7 wt%. The $SHI_{2\cdot7/210}$ is 42 and the viscosity at a shear stress of 747 Pa is 340 kPa.

P2 is a high density ethylene-1-butene-copolymer having a density of 949 kg/$m^3$ an $MFR_5$ (5.00 kg, 190 °C, ISO 1133) of 0.25 g/10 min and a comonomer-content of 1.7 wt%. The $SHI_{2.7/210}$ is 54 and the viscosity at a shear stress of 747 Pa is 250 kPa.

### Compounding

The compositions in Table 1 were compounded on a Prism TSE 24 HC twin screw extruder having a screw diameter of 24 mm from Thermo Fisher. The length/diameter ratio was 28 and compounding was performed at 250 rpm, the output was 7 kg/hr and the torque 80 bar. The specific energy input (SEI) was, thus, 0.274. The ingredients of the compositions were dry-mixed and added by a gravimetric feeder into the first port of the mixer. After pelletizing the products were dried and packed in glass bottles.

The applied temperature and the amounts used are given in the following tables.

| | | CE1 | CE2 | CE3 | CE4 |
|---|---|---|---|---|---|
| Polymer | | P1 | P1 | P2 | P2 |
| Polymer amount | [wt.%] | 99.63 | 99.63 | 99.63 | 99.63 |
| Irganox 1010 | ppm | 1100 | 1100 | 1100 | 1100 |
| Irgafos 168 | ppm | 1100 | 1100 | 1100 | 1100 |
| Calcium stearate | [wt.%] | 1500 | 1500 | 1500 | 1500 |
| Carbon black master batch | [wt.%] | - | - | - | - |
| Carbon black content | [wt.%] | - | - | - | - |
| Hopper | [°C] | 20 | 20 | 20 | 20 |
| barrel Zone 1 | [°C] | 193 | 203 | 193 | 203 |
| barrel zone 2 | [°C] | 249 | 275 | 249 | 275 |
| barrel zone 3 | [°C] | 256 | 295 | 256 | 295 |
| barrel zone 4 | [°C] | 260 | 299 | 260 | 299 |
| barrel zone 5 | [°C] | 261 | 301 | 261 | 301 |
| Die | [°C] | 260 | 300 | 260 | 300 |
| torque | [%] | 75 | 74 | 77 | 74 |
| Die pressure | [bar] | 35 | 35 | 31 | 36 |
| | | | | | |
| **Taste Results** | | | | | |
| Level | | 2-4 | >4 | 2-4 | >4 |
| Decimal value | | 3.8 | 5.0 | 2.5 | 5.0 |

| | | REF5 | REF6 | REF7 | REF8 |
|---|---|---|---|---|---|
| Polymer | | P1 | P1 | P2 | P2 |
| Polymer amount | [wt.%] | 93.88 | 93.88 | 93.88 | 93.88 |
| Irganox 1010 | ppm | 1100 | 1100 | 1100 | 1100 |
| Irgafos 168 | ppm | 1100 | 1100 | 1100 | 1100 |
| Calcium stearate | [wt.%] | 1500 | 1500 | 1500 | 1500 |
| Carbon black master batch | [wt.%] | 5.75 | 5.75 | 5.75 | 5.75 |
| Carbon black content | [wt.%] | 2.27 | 2.27 | 2.27 | 2.27 |
| Hopper | [°C] | 20 | 20 | 20 | 20 |
| barrel zone 1 | [°C] | 190 | 203 | 190 | 203 |
| barrel zone 2 | [°C] | 250 | 275 | 250 | 275 |
| barrel zone 3 | [°C] | 258 | 295 | 258 | 295 |
| barrel zone 4 | [°C] | 259 | 299 | 259 | 299 |
| barrel zone 5 | [°C] | 260 | 301 | 260 | 301 |
| Die | [°C] | 260 | 300 | 260 | 300 |
| Torque | [%] | 78 | 79 | 83 | 82 |
| Die pressure | [bar] | 29 | 44 | 30 | 36 |
| | | | | | |
| Taste Results | | | | | |
| Level | | 2-4 | >4 | 1.5-2 | 2-4 |
| Decimal value | | 2.6 | 4.7 | 1.8 | 3.4 |

| | | IE9 | IE10 | CE11 | CE12 | CE13 | CE14 |
|---|---|---|---|---|---|---|---|
| Polymer | | P1 | P2 | P1 | P2 | P1 | P2 |
| Polymer amount | [wt.%] | 93.96 | 93.96 | 94.25 | 94.25 | 100 | 100 |
| Irganox 1330 | ppm | 1120 | 1120 | - | - | - | - |
| Irganox E 201 | ppm | 255 | 255 | - | - | - | - |
| Calcium stearate | [wt.%] | 1525 | 1525 | - | - | - | - |
| Carbon black master batch | [wt.%] | 5.75 | 5.75 | 5.75 | 5.75 | - | - |
| Carbon black content | [wt.%] | 2.27 | 2.27 | 2.27 | 2.27 | - | - |
| Hopper | [°C] | 20 | 20 | 20 | 20 | 20 | 20 |
| barrel zone 1 | [°C] | 203 | 203 | 203 | 203 | 203 | 203 |
| barrel zone 2 | [°C] | 275 | 275 | 275 | 275 | 275 | 275 |
| barrel zone 3 | [°C] | 295 | 295 | 295 | 295 | 295 | 295 |
| barrel zone 4 | [°C] | 299 | 299 | 299 | 299 | 299 | 299 |
| barrel zone 5 | [°C] | 301 | 301 | 301 | 301 | 301 | 301 |
| Die | [°C] | 300 | 300 | 300 | 300 | 300 | 300 |
| Torque | [%] | 80 | 74 | 80 | 74 | 71 | 80 |
| Die pressure | [bar] | 31 | 30 | 30 | 30 | 25 | 43 |
| | | | | | | | |
| Taste Results | | | | | | | |
| Level | | 2-4 | 1-1.5 | >4 | >4 | >4 | >4 |
| Decimal value | | 3.1 | 1.4 | 5.0 | 4.8 | 4.7 | 4.6 |

## Claims

**1.** Use of a combination of additives comprising at least two of the following compounds:

- an antioxidant (A) according to formula (I):

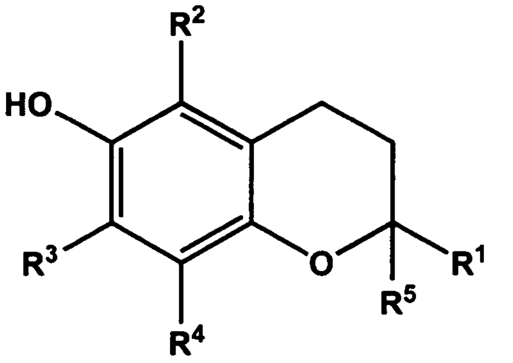

(I)

wherein $R^1$, $R^2$, $R^3$, $R^4$ and $R^5$ independently are H, or non-substituted or substituted aliphatic or aromatic hydrocarbyl radicals which may comprise heteroatoms,
- an antioxidant (B) according to formula (II):

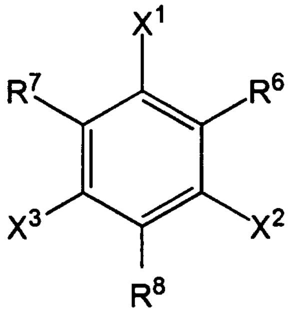

(II)

wherein

◦ $R^6$, $R^7$ and $R^8$ independently are non-substituted or substituted aliphatic or aromatic hydrocarbyl radicals which may comprise OH-groups;
◦ $X^1$, $X^2$, and $X^3$ independently are H or OH, with the provisio that at least one of $X^1$, $X^2$ and $X^3$ is OH; and
◦ the entire molecule does not comprise an ester group;

and,
- carbon black;
for reducing taste and/or odour in a polyolefin composition comprising an ethylene homo- or copolymer having an $MFR_5$ (5.00 kg, 190 °C, ISO 1133) of not more than 0.50 g/10 min.

**2.** The use according to claim 1, wherein the combination of additives comprises

- carbon black;
and, in addition to carbon black
- an antioxidant (A) according to formula (I)
and/or
an antioxidant (B) according to formula (II);

**3.** The use according to any one of the preceding claims, wherein the combination of additives comprises

- carbon black;

and, in addition to carbon black;
- an antioxidant (A) according to formula (I);
and
an antioxidant (B) according to formula (II).

**4.** Use according to any one of the preceding claims, wherein the amount of the sum of components (A) and (B) is from 600 to 2500 ppm based on the polyolefin composition.

**5.** Use according to any one of the preceding claims, wherein compound (A) is present in an amount of 100 to 1000 ppm based on the polyolefin composition.

**6.** Use according to any one of the preceding claims, wherein compound (B) is present in an amount of 500 to 2000 ppm based on the polyolefin composition.

**7.** Use according to any one of the preceding claims, wherein the carbon black is present in an amount of 1.0 to 10.0 wt.% based on the polyolefin composition.

**8.** Use according to claim 1, wherein the base resin of said polyolefin composition consists of an ethylene homo- or copolymer and polymers introduced into the composition as master batches.

**9.** Use according to any one of the preceding claims, wherein the composition comprises only one compound of formula (I), if present and only one compound of formula (II), if present.

**10.** Use according to any one of the preceding claims, wherein compounds (A) and (B) do not contain a phosphor atom.

**11.** Use according to any one of the preceding claims, wherein the carbon black is having a BET specific surface area of from 10 to 500 $m^2/g$.

**12.** Use according to any one of the preceding claims, wherein the carbon black has an ash content of not more than 1.0 wt.%,

**13.** Use according to any one of the preceding claims, wherein the polyolefin composition is in the form of a pipe.

**14.** Use according to claim 13, wherein the pipe is a drinking water pipe.

## Patentansprüche

**1.** Verwendung von einer Kombination von Zusatzstoffen, umfassend mindestens zwei der folgenden Verbindungen:

- ein Antioxidationsmittel (A) gemäß der Formel (I):

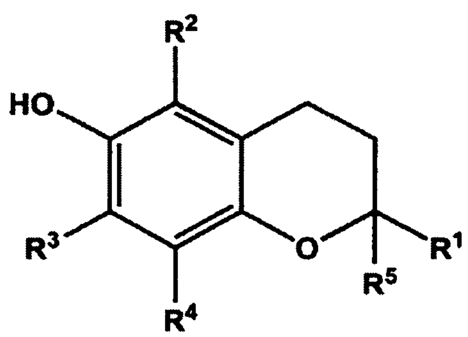

(I)

wobei $R^1$, $R^2$, $R^3$, $R^4$ und $R^5$ unabhängig H oder nicht-substituierte oder substituierte, aliphatische oder aromatische Hydrocarbylradikale sind, die Heteroatome umfassen können,
- ein Antioxidationsmittel (B) gemäß der Formel (II):

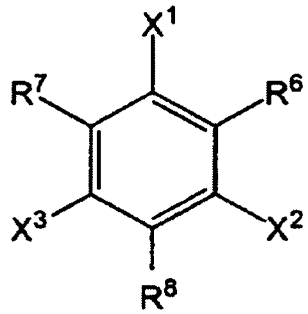

(II)

wobei

- $R^6$, $R^7$ und $R^8$ unabhängig nicht-substituierte oder substituierte, aliphatische oder aromatische Hydrocarbylradikale sind, die OH-Gruppen umfassen können;
- $X^1$, $X^2$ und $X^3$ unabhängig H oder OH sind, unter der Voraussetzung, dass mindestens einer von $X^1$, $X^2$ und $X^3$ OH ist; und
- das gesamte Molekül keine Estergruppe umfasst;

und
- Ruß;
um Geschmack und/oder Geruch in einer Polyolefinzusammensetzung zu verringern, die ein Ethylenhomo- oder -copolymer umfasst, das einen $MFR_5$ (5,00 kg, 190 °C, ISO 1133) von nicht mehr als 0,50 g/10 min aufweist.

2. Verwendung nach Anspruch 1, wobei die Kombination von Zusatzstoffen das Folgende umfasst:

- Ruß;
und zusätzlich zu Ruß:
- ein Antioxidationsmittel (A) gemäß der Formel (I)
und/oder
ein Antioxidationsmittel (B) gemäß der Formel (II).

3. Verwendung nach einem der vorhergehenden Ansprüche, wobei die Kombination von Zusatzstoffen das Folgende umfasst:

- Ruß;
und zusätzlich zu Ruß:
- ein Antioxidationsmittel (A) gemäß der Formel (I)
und
ein Antioxidationsmittel (B) gemäß der Formel (II).

4. Verwendung nach einem der vorhergehenden Ansprüche, wobei die Menge von der Summe der Komponenten (A) und (B) 600 bis 2500 ppm beträgt, basierend auf der Polyolefinzusammensetzung.

5. Verwendung nach einem der vorhergehenden Ansprüche, wobei die Verbindung (A) mit einer Menge von 100 bis 1000 ppm vorliegt, basierend auf der Polyolefinzusammensetzung.

6. Verwendung nach einem der vorhergehenden Ansprüche, wobei die Verbindung (B) mit einer Menge von 500 bis 2000 ppm vorliegt, basierend auf der Polyolefinzusammensetzung.

7. Verwendung nach einem der vorhergehenden Ansprüche, wobei der Ruß mit einer Menge von 1,0 bis 10,0 Gew.-% vorliegt, basierend auf der Polyolefinzusammensetzung.

8. Verwendung nach Anspruch 1, wobei das Basisharz von der Polyolefinzusammensetzung aus einem Ethylenhomo- oder -copolymer und Polymeren besteht, die als Masterbatches in die Zusammensetzung eingeführt werden.

9. Verwendung nach einem der vorhergehenden Ansprüche, wobei die Zusammensetzung, falls vorliegend, nur genau

eine Verbindung mit der Formel (I) und, falls vorliegend, nur genau eine Verbindung mit der Formel (II) umfasst.

**10.** Verwendung nach einem der vorhergehenden Ansprüche, wobei die Verbindungen (A) und (B) kein Phosphoratom enthalten.

**11.** Verwendung nach einem der vorhergehenden Ansprüche, wobei der Ruß eine BET-spezifische Oberfläche von 10 bis 500 $m^2/g$ aufweist.

**12.** Verwendung nach einem der vorhergehenden Ansprüche, wobei der Ruß einen Aschegehalt von nicht mehr als 1,0 Gew.-% aufweist.

**13.** Verwendung nach einem der vorhergehenden Ansprüche, wobei die Polyolefinzusammensetzung in der Form eines Rohrs vorliegt.

**14.** Verwendung nach Anspruch 13, wobei das Rohr ein Trinkwasserrohr ist.

## Revendications

**1.** Utilisation d'une combinaison d'additifs comprenant au moins deux des composés suivants :

- un antioxydant (A) répondant à la formule (I) :

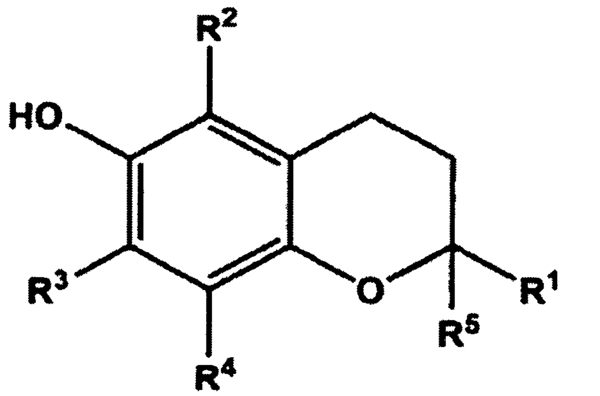

(I)

dans laquelle $R^1$, $R^2$, $R^3$, $R^4$ et $R^5$ sont indépendamment H ou des radicaux hydrocarbyle aliphatiques ou aromatiques non substitués ou substitués qui peuvent comprendre des hétéroatomes,
- un antioxydant (B) répondant à la formule (II) :

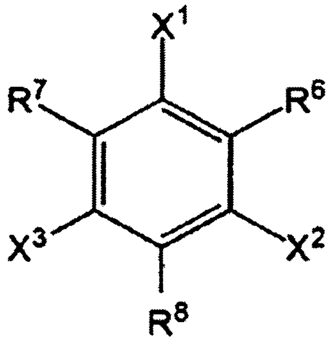

(II)

dans laquelle

◦ $R^6$, $R^7$ et $R^8$ sont indépendamment des radicaux hydrocarbyle aliphatiques ou aromatiques non substitués ou substitués qui peuvent comprendre des groupes OH;

◦ $X^1$, $X^2$ et $X^3$ sont indépendamment H ou OH, à condition qu'au moins un de $X^1$, $X^2$ et $X^3$ soit OH ; et
◦ la molécule entière ne comprend pas de groupe ester ;
et

- du noir de carbone ;

pour réduire le goût et/ou l'odeur d'une composition de polyoléfine comprenant un homo- ou copolymère d'éthylène ayant un $MFR_5$ (5,00 kg, 190 °C, ISO 1133) de pas plus de 0,50 g/10 min.

**2.** Utilisation selon la revendication 1, dans laquelle la combinaison d'additifs comprend :

- du noir de carbone ;
et en plus du noir de carbone
- un antioxydant (A) répondant à la formule (I)
et/ou
- un antioxydant (B) répondant à la formule (II).

**3.** Utilisation selon l'une quelconque des revendications précédentes, dans laquelle la combinaison d'additifs comprend :

- du noir de carbone ;
et en plus du noir de carbone
- un antioxydant (A) répondant à la formule (I)
et
- un antioxydant (B) répondant à la formule (II).

**4.** Utilisation selon l'une quelconque des revendications précédentes, dans laquelle la quantité de la somme des composants (A) et (B) est de 600 à 2 500 ppm en se basant sur la composition de polyoléfine.

**5.** Utilisation selon l'une quelconque des revendications précédentes, dans laquelle le composé (A) est présent en une quantité de 100 à 1 000 ppm en se basant sur la composition de polyoléfine.

**6.** Utilisation selon l'une quelconque des revendications précédentes, dans laquelle le composé (B) est présent en une quantité de 500 à 2 000 ppm en se basant sur la composition de polyoléfine.

**7.** Utilisation selon l'une quelconque des revendications précédentes, dans laquelle le noir de carbone est présent en une quantité de 1,0 à 10,0 % en poids en se basant sur la composition de polyoléfine.

**8.** Utilisation selon la revendication 1, dans laquelle la résine de base de ladite composition de polyoléfine se compose d'un homo- ou copolymère d'éthylène et de polymères introduits dans la composition en tant que mélanges maîtres.

**9.** Utilisation selon l'une quelconque des revendications précédentes, dans laquelle la composition comprend uniquement un composé de formule (I), si présent et uniquement un composé de formule (II), si présent.

**10.** Utilisation selon l'une quelconque des revendications précédentes, dans laquelle les composés (A) et B) ne contiennent pas d'atome de phosphore.

**11.** Utilisation selon l'une quelconque des revendications précédentes, dans laquelle le noir de carbone a une surface spécifique BET de 10 à 500 $m^2$/g.

**12.** Utilisation selon l'une quelconque des revendications précédentes, dans laquelle le noir de carbone a une teneur en cendres de pas plus de 1,0 % en poids.

**13.** Utilisation selon l'une quelconque des revendications précédentes, dans laquelle la composition de polyoléfine est sous la forme d'un tuyau.

**14.** Utilisation selon la revendication 13, dans laquelle le tuyau est un tuyau d'eau potable.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1942135 A
- JP 1023970 A
- EP 0522129 A
- US 4833181 A
- EP 0739937 A
- WO 02102891 A
- WO 0022040 A


### Non-patent literature cited in the description


- **BLEDZKI et al.** *Polymer Testing,* 1999, vol. 18 (1), 6371
- **HEINO, E.L. ; LEHTINEN, A. ; TANNER J. ; SEPPÄLÄ, J. ; NESTE OY ; PORVOO, FINLAND.** Rheological characterization of polyethylene fractions. *Theor. Appl. Rheol., Proc. Int. Congr. Rheol,* 1992, vol. 1, 360-362
- **HEINO, E.L. ; BOREALIS POLYMERS OY ; PORVOO, FINLAND.** The influence of molecular structure on some rheological properties of polyethylene. *Annual Transactions of the Nordic Rheology Society,* 1995